# EUROPEAN PATENT APPLICATION

(11) **EP 2 019 369 A1**
(43) Date of publication of application: **28.01.2009**
(21) Application number: 08160519.8
(22) Date of filing: 16.07.2008
(51) Int. Cl.: G06Q 10/00

(54) **Integrator module for several computer applications**

(30) Priority: 27.07.2007 EP 07113333; 13.12.2007 WO PCT/NL2007/050648
(71) Applicant: Dexton Software Solutions B.V., 2909 LE Capelle a/d Ijssel (NL)
(72) Inventor: Halkus, Gerrit Joseph, 2909 LE, Capelle a/d Ijssel (NL); Jongsma, Willem Machiel, 2909 LE, Capelle a/d Ijssel (NL)
(74) Representative: Ketelaars, Maarten F.J.M.

(57) **Abstract**

Integrator module for integrating one or more computer applications being executed on one or more computer systems. The one or more computer systems are in communication with one or more associated memory units for storing data. The integrator module is in communication with a requesting application being executed on the one or more computer systems, and is arranged to determine data needed by the requesting application from the one or more computer applications, to retrieve the data needed from the one or more computer applications, to store the retrieved data in a structured manner in a memory unit connected to the integrator module, and to make available the structured data to the requesting application.

## Description

### Technical field

The present invention relates to an integrator module for integrating one or more computer applications being executed on one or more computer systems

### Background

The term business intelligence (BI) refers to technologies, applications, and practices for the collection, integration, analysis, and presentation (i.e. reporting) of business information and also sometimes to the information itself. The purpose of business intelligence is to support better business decision-making. BI systems provide historical, current, and predictive views of business operations, most often using data that has been gathered into a data warehouse. This data warehouse is loaded by a software tool that applies a series of rules or functions to data extracted from particular data sources of business software applications. Such a data warehouse is periodically updated and not always reflects the current status and data of associated applications.

### Summary of the invention

The present application seeks to provide an improved tool or software module that enables the use of up-to-date information of associated computer applications.

According to the present invention an integrator module for integrating one or more computer applications being executed on one or more computer systems is provided, the one or more computer systems being in communication with one or more associated memory units (such as semiconductor chips, a hard disk, an optical disk, etc.) for storing data, the integrator module being in communication with a requesting application being executed on the one or more computer systems, and being arranged to determine data needed by the requesting application from the one or more computer applications, retrieving (and optionally processing) the data needed from the one or more computer applications, storing the retrieved data in a structured manner in a memory unit (e.g. a virtual database) connected to the integrator module, and making available the structured data to the requesting application, e.g. in the form of an XML stream. By building a virtual database with the requested (and processed) data, the requesting application is ensured to obtain up-to-date information, independent from an update cycle of a periodically updated database such as a data warehouse.

In a further embodiment, the integrator module is further arranged to delete the structured data after use by the requesting application. In this manner the capacity requirements of the virtual database can be kept to a minimum.

Retrieving the data needed is implemented in a further embodiment by sending a request to the associated application to provide the data needed, e.g. using an XML request. By interfacing with the associated application, it is ensured that the correct data are obtained, and furthermore, already existing functionality of the associated application can be used.

Retrieving the data needed is implemented in an even further embodiment by retrieving the data from a database stored on the associated memory unit. By directly interfacing with the database very fast access can be provided. It is noted that this embodiment can be used for the interfacing with one application, and the earlier described embodiment for interfacing with another application.

In a further embodiment the integrator module interfaces with the one or more applications (and/or the associated memory units) to receive information on available data from each of the one or more applications. By having this information available in the integrator module, it is easy to dynamically alter the data gathering depending on received requests.

Interfacing is accomplished using a web service and/or a coupling to a database. These implementations allow fast and reliable data exchange, and furthermore provide flexibility.

In a further embodiment the integrator module is further arranged for storing metadata (concerning data elements and data sources) in relation to the one or more applications needed to obtain the data needed. Using this metadata user requests or templates can be stored and re-used when appropriate.

In a further aspect, the present invention relates to a computer program product comprising computer executable code, which when loaded on a computer provides the computer with the functionality of the integrator module according to any one of the present invention embodiments.

### Brief description of the drawings

The present invention will be discussed in more detail below, using a number of exemplary embodiments, with reference to the attached drawings, in which:
Fig. 1 schematically shows a diagram of a state of the art business analysis system;
Fig. 2 schematically shows a diagram of an example of a business analysis system according to an embodiment;
Fig. 2a schematically shows a diagram depicting data flows in an embodiment of the present invention;
Fig. 3 shows the main components of the Integrator according to an embodiment;
Fig. 4 shows an example of a screen produced by the GUI of the software platform;
Fig. 5 shows an example of the screen with a situation in which the user has selected the context 'Charter';
Fig. 6 shows a screen in a situation where the user has dragged an Interest component onto the main section of the screen;

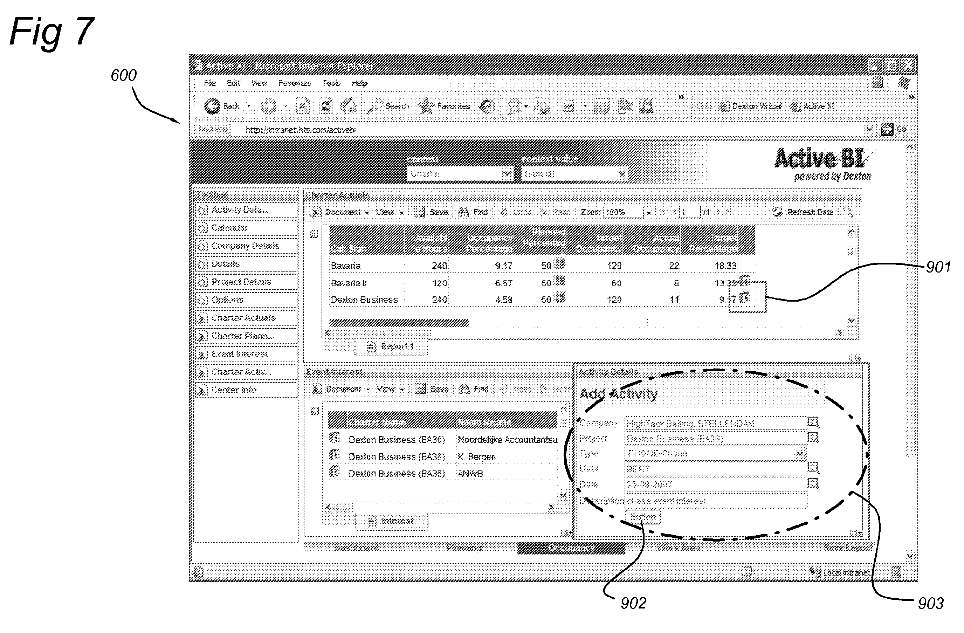

Fig. 7 shows the screen in which KPI-icons are displayed related to particular KPI's.

### Detailed description of exemplary embodiments

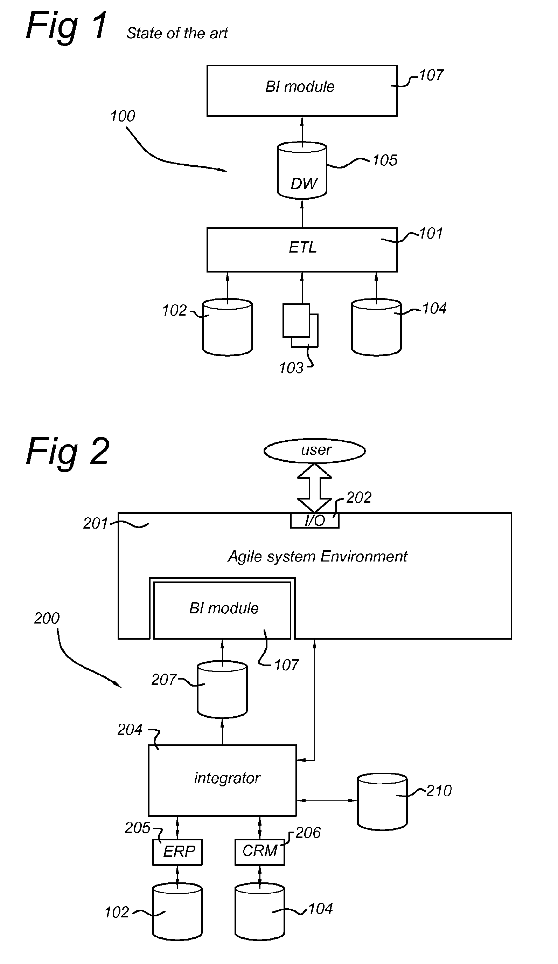

Figure 1 schematically shows a diagram of a prior art business analysis system 100. The system 100 comprises an Extract Transform and Load (ETL) tool 101 which extracts data from one or more data sources 102, 103, 104. Each separate data source may use a different data organization and/or format. Examples of such data sources are relational databases and data files, but may include non-relational database structures such as IMS or other data structures such as VSAM or ISAM. The ETL tool 101 converts the data from the data sources 102, 103, 104 into a format for a transformation stage. In this transformation stage, the ETL tool 101 may apply a series of rules or functions to the extracted data from the data sources 102, 103, 104 to derive the data to be loaded to an end target, such as a data warehouse (DW) 105. Some data sources will require very little or even no manipulation of data. In other cases, one or more transformations meet the business and technical needs of the end target may be required. The data warehouse 105 might regularly (e.g. weekly or daily) overwrite existing information with cumulative, updated data delivered by te ETL tool 101.

In this example, the business analysis system 100 also comprises a BI module 107 implemented e.g. by a software program arranged to produce business reports. These business reports may be used by business managers who need this information for e.g. decision making. The BI module 107 uses data stored at the data warehouse 105. The BI module 107 can retrieve data from the data warehouse 105, but it does not update data stored in the data warehouse 105. The data warehouse 105 is only updated by the ETL tool 101. The prior art BI module 107 may be arranged to enable a user to form his own reports as needed. However, such a user is never authorized to write back into the original data sources 102, 103, 104 owned by the business software applications. This would make the data in these data sources 102, 103, 104 unverifiable.

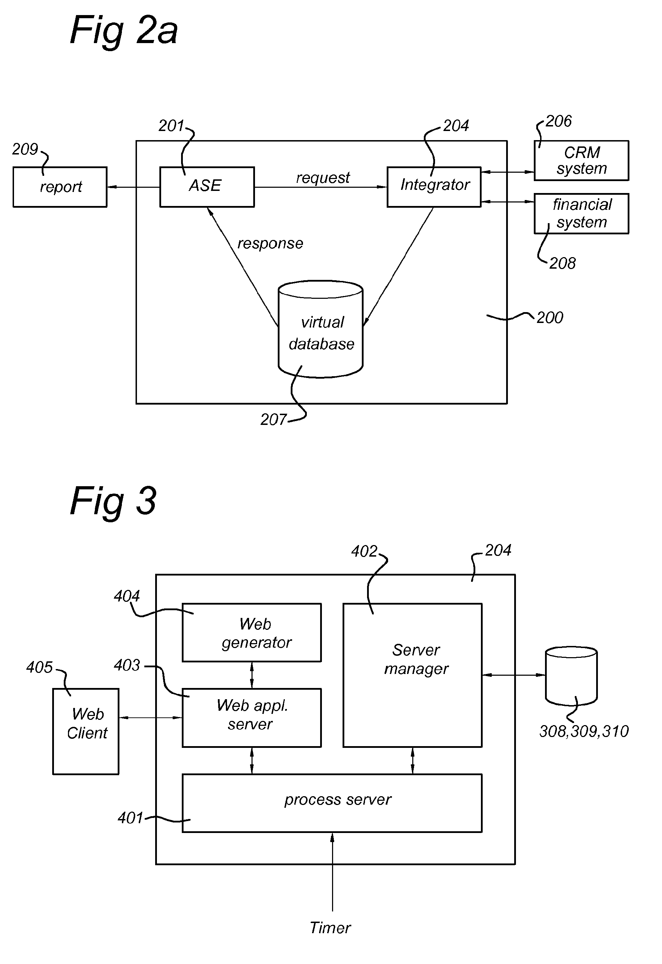

Figure 2 schematically shows a diagram of an example of a system 200 for analyzing and controlling a processes according to an embodiment of the invention. The system 200 for analyzing and controlling a processes is also referred to as 'business analysis system 200'. The business analysis system 200 comprises a platform 201 also referred to as Agile System Environment (ASE) 201, which is arranged to support and interact with several BI modules 107 such as the BI module 107 mentioned above. The ASE platform 201 has an I/O module 202 that is arranged to provide an interface to a user of the business analysis system 200, e.g. using regular computer user interfaces such as keyboard, display and mouse. The business analysis system 200 also comprises an integrating module 204. The integrating module 204, also referred to as Integrator 204, is arranged to communicate with the ASE platform 201 and with a plurality of computer applications 205, 206, such as business applications (ERM, CRM, financial applications, etc.).

The Integrator 204 is arranged to retrieve the data from the data sources 102, 103, 104 directly or from the associated applications 205, 206, and possibly to manipulate the data. After retrieving data from one or more databases 102, 104, the Integrator 204 stores it into an associated memory 207 for making available the data needed to the BI module 107, such as RAM. The Integrator 204 is arranged to perform data manipulation on data present in this memory. The Integrator 204 can perform calculations on data in its memory, combine several data sources and offer the adjusted manipulated data to the BI modules 107, 108. The BI modules 107, 108 experience the data stored in a memory by the Integrator 204 as a so-called Virtual database 207, see Figure 2.

The Integrator 204 is arranged to store relevant business data into the memory unit 207 (i.e. virtual database) whenever the ASE 201 requests. Contrary to present data warehouses regularly filled by an ETL tool, the virtual database 207 will contain up-to-date information retrieved from the data sources 102, 103, 104 at the time of the request received from the ASE 201.

The Integrator 204 is furthermore connected to a further database 210, which may be used to store information related to the applications 205, 206 the Integrator 204 interfaces with. This may e.g. relate to metadata where data originating from a specific application may be retrieved (such as in a specific field (with a specific name) of database 102 associated with the ERP application 205).

The BI module 107 may be a reporting tool or reporting application integrated in the ASE 201 that calculates whether certain KPI (i.e. a business target parameter) are met and may signal differences in planning and actuals. The signals of the BI module are processed by the ASE platform 201 and are graphically shown on a display, e.g. as part of the user interface 202. The user will then notice these differences and may decide to act. If the user decides to act, the Integrator 204 receives a command from the ASE platform 201 indicating that the user asked for action to decrease a difference between a value of a business target parameter and a value of a realization parameter (i.e. actual performance). Alternatively, the Integrator 204 may receive the command directly from the business intelligence module 107. By sending this command, the ASE platform 201 will activate a business action process in the Integrator 204 in order to automatically create the appropriate business actions. Which business actions need to be taken depends on the particular business model. A business model may constitute of a set of business rules that are stored in e.g. a repository (i.e. a database) 210. In an embodiment, the Integrator 204 itself fills the repository 210 with business rules. These business rules are defined by the user that can use the I/O functionality of the ASE platform 201 or of the Integrator 204 to enter the business rules into the business analysis system 200.

Contrary to common ETL tools, the Integrator 204 according to the present invention is arranged to communicate directly to the business applications 205, 206 managing associated databases 102, 104. In the example shown in Figure 2, the Integrator 204 communicates with an ERP application 205 and with a CRM application 206. To communicate with the business applications, the Integrator 204 may use several standard techniques such as XML, Web Services and ActiveX Data Objects (ADO). This can even be implemented without undue effort when the applications 205, 206 and the ASE 201 are implemented in one or more different computer systems, e.g. geographically apart.

Communication on an 'application level' makes it possible that the business actions created by the Integrator 204 can be communicated to the business applications 205, 206 themselves. The business applications will process these actions into their associated data stored in databases 102, 104. Once the actions are processed by the appropriate business applications 205, 206, the BI modules 107 will as soon as they request new data from the Virtual database 207, get business information in which the actions taken are already processed. This loop of 1) displaying differences between planning and actuals 2) initiate appropriate actions 3) automatically perform those actions 4) store consequences of those actions into the appropriate databases 5) retrieve up-to-date business information, is referred to as 'Actionable Business Intelligence'.

The data manipulation can be done with or without user interaction. Business processes are broken down into separate steps by the user and based on certain rules; these steps will be carried out by the Integrator 204. A business process needs parameters to run. These business parameters can be retrieved from a business model data source (not shown) or they can be entered by the user. The Integrator 204 may use different types of data sources to read from and to write back into.

These may vary from SQL databases like Oracle and Microsoft SQL Server to Open Source varieties like MySQL. The Integrator 204 may also use virtual sources like web services or other XML streams and combine these with the data from applications 105, 206 into the virtual database 207.

Figure 2a shows an example of data flows in the business analysis system 200. A request may be generated by the ASE 201 in the role of requesting application, e.g. upon request by a user via the user interface 202. In this example, the Integrator 204 interfaces with a CRM application 206 and a financial application 208. Both the CRM application 206 and the financial application may be executing on different hardware, and each have an associated memory module for storing data, e.g. in the form of a database. The Integrator 204 may use a modeling of the data available from these two applications 206, 208 to match the request for data needed, e.g. using metadata. E.g. the metadata may include that the CRM application 206 has data available on company name, address, debtor identification, and that the financial application 208 has data available on debtor identification and debtor balance. This metadata may then be used to define the virtual database 207 which eventually comprises the data needed according to the request.

In the example, the request relates to data concerning clients, including debtor identification and debtor balance. The client data originates from the CRM application 206 and the debtor data from the financial application 208. To be able to link the data from the two applications, the metadata indicates e.g. that a debtor identification is available in both applications. The Integrator 204 collects all up-to-date data from both applications 206, 208, and performs the necessary actions to comply with the request (e.g. by summing all open invoices on the balance).

The Integrator 204 interfaces with the financial application 208 using a web service (as indicated in the metadata), and thus directly interfaces with the application itself. The CRM application 206 is providing data to the Integrator 204 directly from its own database, e.g. using ADO/ODBC.

When the data is gathered from the applications 206, 208, and further processing thereof by the Integrator 204 is finished, the data is stored in a structured manner in virtual database 207. The data is now available for the requestor, and e.g. provided as XML data stream from the virtual database 207 to the ASE 201. In the ASE 201, this requested data can then be provided to the requesting application, e.g. a reporting application 209 (or the BI module 107 of the embodiment in Figure 2). The virtual database 207 now is a data source for the requesting application which comprises up-to-date information.

It is noted that the data in the virtual database 207 is deleted after use when no longer needed by the requesting application. When a requesting application again sends a request (via ASE 201), the data in the virtual database is put together anew, in order to make sure the obtained data is up-to-date. This also means that the amount of storage space needed for the virtual database 207 is rather limited, as data is only stored temporarily. In contrast to existing systems using a periodically updated data warehouse, the present invention embodiments use up-to-date data acquired directly from the application concerned (or even directly from a database or other data source associated with such application).

The interfacing between the various elements may be implemented using a number of possible data exchange formats. E.g. the request message from ASE 210 to Integrator 204 may be implemented using an XML interface. The response data from virtual database 207 to ASE 201 (and requesting application: reporting application 209) may be implemented as an XML data stream as described above. The coupling of Integrator 204 to the applications 206, 208 (and other possible applications) can be implemented in various way, including but not limited to an XML file, and XML stream (web service), a web source (e.g. an XML service over the Internet such as NYSE information, ADO/ODBC, CSV files, API's (specific connector modules of operating systems), MAPI (email), Exchange interface, Windows Index Server Interface.

Figure 3 shows the main components of an embodiment of the Integrator 204. The Integrator 204 comprises a Process Server 401, a Server Manager 402, a Web Application Server 403 and a Web Generator 404. The Process Server 401 is arranged to service processes of the Integrator 204. These processes are triggered either by a timer or by changes in a business data source, such as the ERP database 102 associated with ARP application 205 in Figure 2. The Server Manager 402 is arranged to control the Process server 401 and the external resources (i.e. data sources 308, 309, 310). The Web Application Server 403 is arranged to connect the Process Server 401 to web clients 405 (browsers). The Web Application Server 403 may service (one-off) processes based on web service calls, generate input XML documents (files and streams), and generate output XML documents (files and streams).

The Web Generator 404 is arranged to connect to the Web Application Server 403. The Web Generator 404 enables the design of business processes and business models by the user by way of a 'drag & drop'-functionality. It is further arranged to generate Web Forms and to process the Web Forms. These Web forms are used to display information when the BI modules 107, 108 lack this functionality or take (additional) user input to start a business process.

The Integrator 204 may use classic and modem software techniques to get the input needed (data sources 102, 103, 104), generate screens (user interaction) and create results. Some of the possible techniques are listed below:
_ XML input streams (including web services)
_ Fits into an Service Oriented Architecture (SOA)
_ Generates SOA components from existing legacy systems
_ ADO/ODBC input and output
_ XML output streams (including web services)
_ File input (XML, CSV)
_ OCX/(B)API support (for example SAP, Microsoft Exchange)
_ File Output (XML, CSV)
_ MAPI support (email)

The various functional entities as described in the embodiments above (ASE 201, user interface 202, Integrator 204, etc.) are indicated as separate functional entities in the embodiments described above. Each of these entities may also be implemented as a computer program being executed on a computer system or data processing system, comprising one or more processors, memory and suitable interfacing circuitry to perform the desired functionality. The computer systems may run under the control of an operating system and a software program comprising computer executable instructions, which may be stored in the associated memory units or loaded into memory during runtime. Alternatively, two or more of the functional entities (and possible one or more of the applications 205, 206 are combined in a single data processing system which provides the functionalities of the various entities. Each computer system may be provided with an associated memory unit for storing data, in the form of unstructured or structured data.

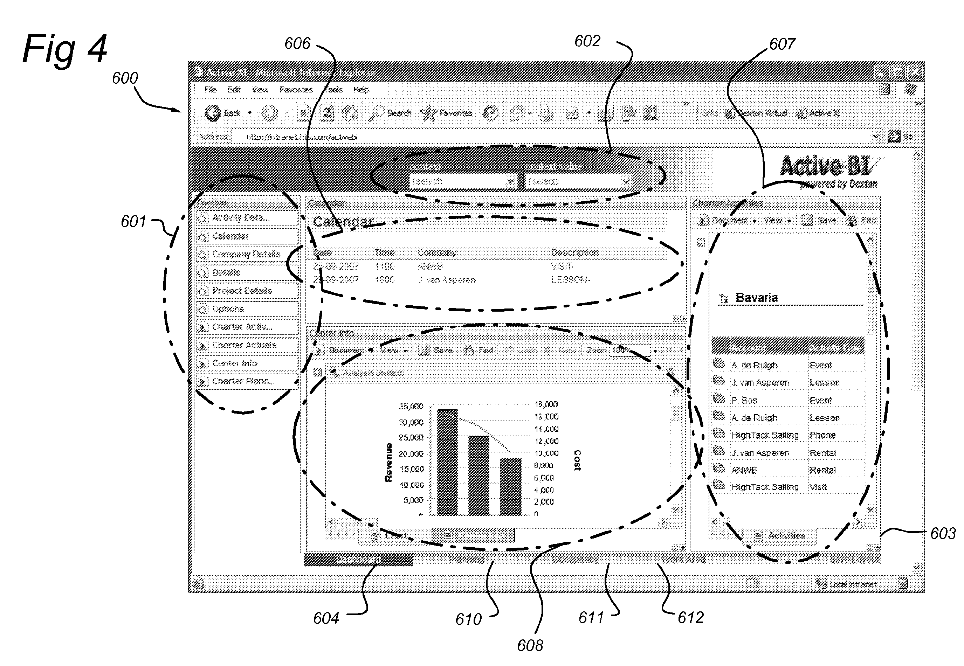

Now the working of the interaction with the user is discussed by way of an example. At the beginning of a session, the user will have to logon to the system. The user will need to enter some sort of ID which is used by the ASE 201 of the analysis system 200 for authentication of the user. The ASE 201 will check if the particular user is authorized to generate actions in the analysis system 200. After identifying the user, the user interface (screens) is composed using settings given by the user. Once the user has logged on, he will see for example a screen 600 as shown in Figure 4. The screen 600 comprises a Toolbar section 601, a Context Selection section 602 and a main section 603 that is implemented as a plurality of tabs. In the example of Figure 4, a tab called 'Dashboard' tab 604 is shown/selected. In this example, business data is shown relating to a charter (i.e. boat) rental company. The company has multiple sailing centers and each sailing center stations a number of charters. The dashboard tab 604 shows a calendar 606, a list 607 of outstanding charter activities for a charter called 'Bavaria', and some detailed information about the performance of a sailing centre, see Center info 608.

The ASE 201 manages all the screen elements needed to do the day-to-day operational tasks varying from analysis to contact management. In this example the Toolbar section 601 and the Context Selection section 602 are managed by the ASE 201. The Context Selection section offers the possibility to select user definable contexts that help going though the day-to-day work. A user can have specific contexts, for example a marketing planner could have typical contexts such as:
- projects
- area's
- target groups.

In this example, the user is a planner for the charter rental company, and his specific contexts are:
- charter
- (sail-) center.

The various tools inside the toolbox are dependant on the context. Choosing a different context in the Context Selection section 602, will display the appropriate tools in the Toolbar section 601 to carry out the tasks at hand. Within the context, there can be multiple ways or areas of looking at the information. These are setup as tabs at the main section 603 of the screen 600. Next to the tab 604 for the dashboard (homepage), a Planning tab 610, an Occupancy tab 611 and a Work area tab 612 for ad-hoc tasks. Each tab may have multiple components on it. These components are selected based on the tools and (pre-) defined user settings. In this example, the user has placed a calendar component 606 on the screen 600, which is an ASE component and is the result of a specific process being run when building up the screen contents (show all the relevant activities for the current user). The other components shown (i.e. 607, 608) are elements of a Business Intelligence module (e.g. Business Objects XI R2). All of these components work together within the selected context. So changing a context value (e.g. selecting a different sailing center) will adjust the component contents accordingly.

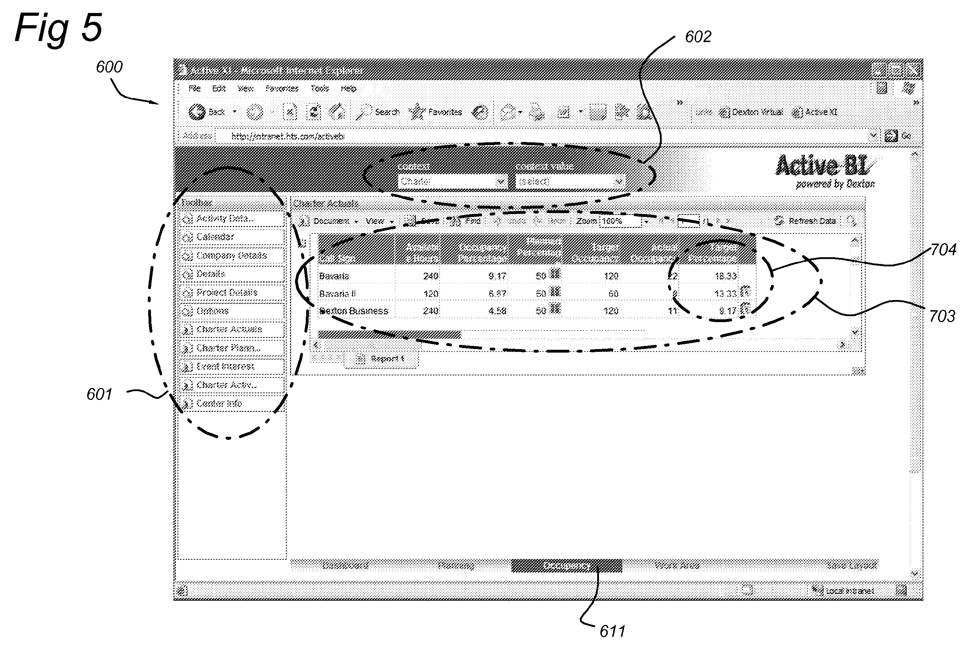

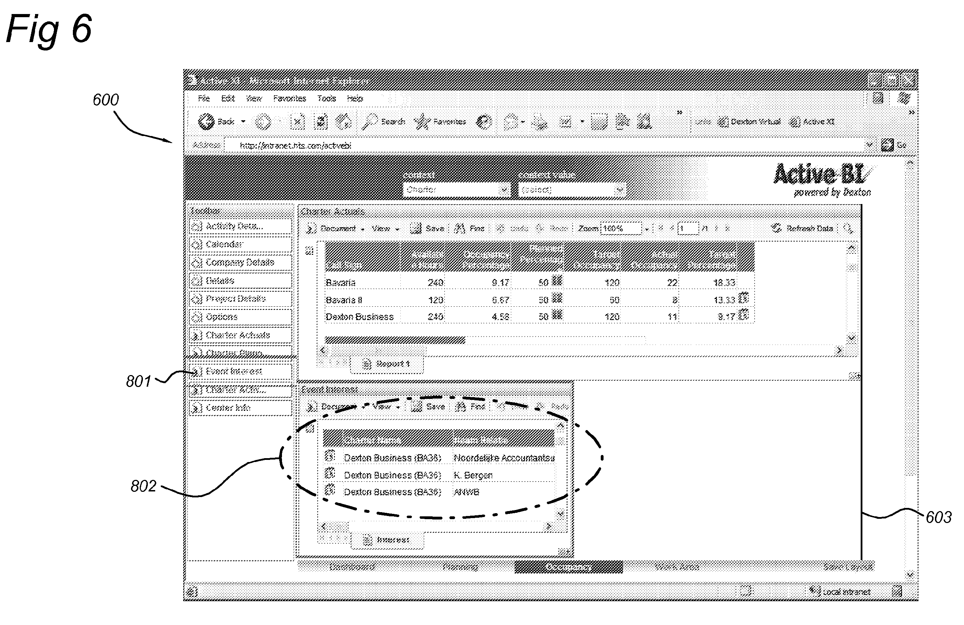

In Figure 5, the screen 600 shows a situation in which the user has selected the context 'Charter'. Now a 'Charter Actuals' component 703 within the context of charters on the occupancy tab 611 shows a table in which a target percentage against each charter is listed (see last column 704 of the table). This target percentage may be calculated based on the realized turnover as well as on the projected turnover based on orders and quotations. Once the context of 'Charter' is selected from the context selection section 602, the appropriate KPI's are calculated based on the information retrieved from the business data sources 102, 103, 104. When a particular KPI is not met for a particular charter, an additional icon is placed next to the target percentage in the table of the Charter Actuals component 703. This additional icon tells the user that the associated KPI is not met. In this example, the planner will notice that for 2 charters, the target percentage has fallen short of the minimum of 15 and is therefore marked with an extra icon. To get further insight into the reasons behind these numbers, the user may choose a component from the Toolbar section 601 to see if anyone has shown an interest in any of the charters. Therefore he can select the option 'Event Interest' 801 and drag it onto the main section 603 of the screen 600, see Figure 6. Now he can see that even although the KPI for the charter called 'Dexton Business' is short of the target (i.e. the KPI is not met), there is an interest in this charter by several prospects, see Event Interest component 802. Information about interest for a particular charter can be obtained from response information stored in for example a CRM system. The user may now decide to take action by starting an appropriate business process. The user will click on the icon 901 and as a result an 'Add activity' component 902 is shown. The Add activity component 902 shows the additional input needed to start a process from the Agile System Environment 201. The business processes are defined using the result of e.g. a business process analysis performed by e.g. business analysts. These defined business processes are modeled and stored into the integrator repository 210. Once the business process is defined, the Integrator 204 will show the corresponding component with the input fields it needs to carry out the business process. The user can check the results and adjust values. Upon pressing the 'OK button' 903, a business process is automatically started ('is kicked-off') in which one or more necessary actions are executed by the analysis system 300. Because of the business rules within the company of the example, the necessary actions are informing someone from the sales department and telling them to chase one or more quotes. In this case, the analysis system 300 will automatically place an activity (e.g. make a phone call) in the task list of a specific user to chase this quote (i.e. HighTack Sailing) and since this is an internal task, the activity is related to the internal company.

The necessary actions generated by the Integrator 204 are the result of a predefined business process entered by the user, and are in compliance with the company policy. The actions are communicated to the business software applications 205, 206 which will initiate the execution of one or more business processes. The results of these business processes are placed by the business software application 205, 206 in its corresponding data source 102, 104. A change in these data sources 102, 104 will then automatically, via the virtual database 207, update the results produced by the BI module 107.

Once the quote has been chased, result of this chase will automatically be 'picked up' by the KPI involved because this particular KPI is based on actual and targeted occupation of the charter. Since the targeted occupations for the charter 'Dexton Business' has now changed, the target percentage displayed in table of the Charter Actuals component 703 will change as well (not shown). The actual handling of the call activity by the sales department can be handled by a CRM-system. Alternatively, a process component may be created in/by the ASE platform 201 which will appear as an action in the Calendar component 606 on the dashboard tab 604 for the selected user.

The present invention has been explained above with reference to a number of exemplary embodiments. As will be apparent to the person skilled in the art various modifications and amendments can be made without departing from the scope of the present invention, as defined in the appended claims.

### List of abbreviations

- ADO: ActiveX Data Objects
- CSV: Character (comma) separated file
- ERP: Enterprise Resource Planning
- GUI: Graphical User Interface
- ISAM: Indexed Sequential Access Method
- KPI: Key Performance Indicator
- ODBC: Open Database Connectivity
- VSAM: Virtual Storage Access Method
- XML: Extended Markup Language

## Claims

1. Integrator module for integrating one or more computer applications being executed on one or more computer systems, the one or more computer systems being in communication with one or more associated memory units for storing data, the integrator module being in communication with a requesting application being executed on the one or more computer systems, and being arranged to determine data needed by the requesting application from the one or more computer applications,
retrieve the data needed from the one or more computer applications, store the retrieved data in a structured manner in a memory unit connected to the integrator module, and
make available the structured data to the requesting application.

2. Integrator module according to claim 1, in which the integrator module is further arranged to delete the structured data after use by the requesting application.

3. Integrator module according to claim 1 or 2, in which retrieving the data needed is implemented by sending a request to the associated application to provide the data needed.

4. Integrator module according to claim 1, 2 or 3, in which retrieving the data needed is implemented by retrieving the data from a database stored on the associated memory unit.

5. Integrator module according to any one of claims 1-4, in which the integrator module interfaces with the one or more applications to receive information on available data from each of the one or more applications.

6. Integrator module according to any one of claims 1-5, in which interfacing is accomplished using a web service and/or a coupling to a database.

7. Integrator module according to any one of claims 1-6, in which the integrator module is further arranged for storing metadata in relation to the one or more applications needed to obtain the data needed.

8. Computer program product comprising computer executable code, which when loaded on a computer provides the computer with the functionality of the integrator module according to any one of claims 1-7.
